# EUROPEAN PATENT SPECIFICATION

(11) **EP 1 939 258 B1**
(45) Date of publication and mention of the grant of the patent: **22.01.2014**
(21) Application number: 08101675.0
(22) Date of filing: 17.12.2004
(51) Int. Cl.: C09B 67/08, C09B 67/04

(54) **Method for preparing preconditioned pigment particles**
Verfahren zur Herstellung von präkonditionierten Pigmentteilchen
Procédé pour la préparation de pigments pré-conditionnés

(30) Priority: 19.12.2003 US 530959
(43) Date of publication of application: 02.07.2008
(62) Divisional of application: 04804030.7
(73) Proprietor: Novartis AG, 4056 Basel (CH)
(72) Inventor: Winterton, Lynn Cook, Alpharette, 30004 (US); Lally, John Martin, Lilburn, GA 30047 (US); Vogt, Jürgen, 4112, Flüh (CH)
(74) Representative: Bohest AG

(56) References cited:
- EP-A- 0 292 702
- EP-A- 0 635 380
- WO-A-2004/056404
- GB-A- 1 025 694
- US-A- 3 375 123
- US-A- 4 588 412
- US-A- 4 713 411
- US-A- 5 274 010
- US-A- 5 401 780
- US-B1- 6 290 768
- US-B1- 6 395 805

## Description

The present invention is related to a method for preparing preconditioned pigment particles.

Visible light absorbing colorants (e.g., dyes, in particular pigments) have been incorporated into contact lenses to enable the consumer to easily locate the lens in a clear solution within a lens storage, disinfecting or cleaning container. Dyeing a lens for this purpose is termed "visibility tinting" the lens.

Visibility tinting may be accomplished by applying a colorant to a portion of the surface, or by applying a colorant to the full front surface of the lens. Alternatively, a colorant may be incorporated into the full body of the polymer matrix of the lens. There have been a number of patents and published patent applications relating to tinting contact lenses. However, the known processes are not yet totally satisfactory. For instance, a pigment dispersion, especially a lens-forming formulation with pigments having submicron particle size may not be stable over an extended long period of time, for example, at least four days or longer. Consequently, the production efficiency and/or the quality of the products obtained can be adversely affected by such problem.

Document US4713411 relates to a pigment composition of an organic pigment and a polymer.

Therefore, there is still a need for a method of making a visibility tinted, i.e., full-body tinted, contact lens with an improved efficiency by, for example, providing a lens-forming formulation including pigment particles with an increased stability.

An object of the invention is to increase the stability of a lens-forming formulation containing pigment particles. Another object of the invention is to provide a method for preparing preconditioned pigment particles.

The invention, in one aspect, provides a method for preconditioning particles of a pigment, wherein the preconditioning comprises:
(a) applying a coating of one or more polyionic materials onto the surfaces of pigments particles by contacting the pigment particles with a solution of the one or more polyionic materials, wherein said method step comprises grinding a pigment in a solution of a polyionic material to a particle size of 1.5 micrometers or smaller to obtain a dispersion, wherein the concentration of the polyionic material is sufficient to coat pigment particles; and
(b) separating the pigment particles from the solution, wherein said method step comprises filtering the solution with pigment particles; washing the filtered pigment particles; and drying the filtered pigment particles coated with the one or more polyionic materials;
wherein the polyionic material is selected from the group consisting of a polycationic material, or a mixture of a polycationic material and a polyanionic material, wherein the polycationic material is seleced from the group consisting of poly(allylamine hydrochloride), poly(ethyleneimine), poly(vinylbenzyltriamethylamine), polyaniline, sulphonated polyaniline, polypyrrole, poly(pyridinium acetylene), and mixtures thereof.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art. As employed throughout the disclosure, the following terms, unless otherwise indicated, shall be understood to have the following meanings.

A "pigment" means a powdered substance that is suspended in a liquid in which it is insoluble. A pigment can be a fluorescent pigment, phosphorescent pigment, pearlescent pigment, or conventional pigment. While any suitable pigment may be employed, it is presently preferred that the pigment be heat resistant, non-toxic and insoluble in aqueous solutions. Examples of preferred pigments include (C.I. is the color index no.), without limitation, for a blue color, phthalocyanine blue (pigment blue 15:3, C.I. 74160), cobalt blue (pigment blue 36, C.I. 77343), Toner cyan BG (Clariant), Permajet blue B2G (Clariant); for a green color, phthalocyanine green (Pigment green 7, C.I. 74260) and chromium sesquioxide; for yellow, red, brown and black colors, various iron oxides; PR122, PY154, for violet, carbazole violet; for black, Monolith black C-K (CIBA Specialty Chemicals).

An "antimicrobial agent", as used herein, refers to a chemical that is capable of decreasing or eliminating or inhibiting the growth of microorganisms such as that term is known in the art.

A "charged polymeric material" or a "polyionic material" refers to a charged polymer that has a plurality of charged groups in a solution, or a mixture of charged polymers each of which has a plurality of charged groups in a solution. Exemplary charged polymers includes polyelectrolytes, p- and n-type doped conducting polymers. Charged polymeric materials include both polycationic (having positive charges) and polyanionic (having negative charges) polymeric materials.

A polycationic material used in the present invention can generally include any material known in the art to have a plurality of positively charged groups along a polymer chain. Preferred polycationic materials are poly(allylamine hydrochloride) (PAH), poly(ethyleneimine) (PEI), poly(vinylbenzyltri-methylamine) (PVBT), polyaniline (PAN or PANI) (p-type doped) or sulphonated polyaniline, polypyrrole (PPY) (p-typed doped), and poly(pyridinium acetylene), and mixtures thereof.

A polycationic material used in the present invention can also include polymeric quaternary ammonium compounds (polyquats). When polyquats are used in the coating of an ophthalmic lens, they may impart antimicrobial properties to the ophthalmic lens.

A polyanionic material used in the present invention can generally include any material known in the art to have a plurality of negatively charged groups along a polymer chain. Preferred polyanionic materials are polymethacrylic acid (PMA), polyacrylic acid (PAA), poly(thiophene-3-acetic acid) (PTAA), poly(4-styrene-sulfonic acid) (PSS), sodium poly(styrene sulfonate) (SPS) and poly(sodium styrene sulfonate) (PSSS), and mixtures thereof.

The invention is useful for producing a full-body tinted contact lens. A method for producing a full-body tinted contact lens comprises the steps of: preconditioning particles of a pigments; dispersing the preconditioned pigment particles in a polymerizable fluid composition to obtain a pigment-containing polymerizable dispersion; introducing an amount of the pigment-containing polymerizable dispersion in a mold for making a contact lens; polymerizing the polymerizable dispersion in the mold to form the a full-body tinted contact lens with the particles of the pigment entrapped and distributed therein.

As used herein, "preconditioning of particles of a pigment" refers to a process which comprises the steps of: (a) applying a coating of one or more polyionic materials onto the surfaces of pigments particles by contacting the pigment particles with a solution of the one or more polyionic materials; (b) filtering the solution with pigment particles, (c) optionally washing the filtered pigment particles; and (d) optionally drying the filtered pigment particles coated with the one or more polyionic materials. It has been discovered that by preconditioning particles of a pigments, those preconditioned pigment particles can be easily dispersed in water and most importantly in a lens formulation for making contact lenses to obtain a pigment-containing polymerizable dispersion for making full-body tinted contact lenses. The obtained pigment-containing polymerizable dispersion has been found to be very stable, without any significant agglomeration over five months. It is believed that by preconditioning, particles of a pigment can be coated with one ore more polyionic material. The coating of one ore more polyionic material may play a central role to facilitate redispersion of pigment particles and stabilize the obtained pigment-containing polymerizable dispersion.

A method of the present invention provides some advantages over the existing methods.

First, the a polymerizable dispersion can be easily prepared from any lens formulation simply by re-dispersing preconditioned pigment particles in the lens formulation. Exemplary lens formulations include without limitation the formulation of nelfilcon, lotrafilcon A, lotrafilcon B, etafilcon A, genfilcon A, lenefilcon A, polymacon, acquafilcon A, balafilcon, and the like.

Second, with preconditioned pigments particles, one can prepare a pigment-containing polymerizable dispersion having any desired concentration of pigment particles.

Third, because of its high stability, a pigment-containing polymerizable dispersion be prepared in well advance before production of contact lenses. Therefore, one can have flexibility in production scheduling of lens productions.

Fourth, because of its high stability, pigment particles can be uniformly distributed in a contact lens so as to obtain a full-body tinted contact lens.

The amount of pigment necessary in a particular application may vary within wide limits dependent, in part, upon the desired final product dimensions and desired visible and/or ultraviolet light transmission. For example, an amount of pigment is chosen so that the optical transmission of the final lens is, for example, greater than 80 %, preferably greater than 90 %, more preferably from 92 % to 99.5 %, and most preferably from 93 % to 97 %. The above transmission values refer to a 100 µm center thickness of the lens and to the wavelength of the absorption maximum of the respective pigment. The amount of pigment necessary to achieve the optical transmission is advantageously chosen so that the weight percentage of pigment, based on the total weight of the polymerizable material in the prepolymerizable fluid composition, is from 0.0001 % to 0.05 %. Preferably, the weight percentage of pigment is from 0.0001 % to 0.02 %. More preferably, the weight percentage of pigment is from 0.0001 % to 0.01 %.

The particle size of the pigment may vary within wide limits. In general, the particle size should be small enough to avoid light scattering, which is clinically significant for the degree of tint intensity required. An average or median particle size (as measured by HORIBA LA-910 particle size analyzer) of less than or equal to about 4 µm, preferably less than or equal to 0.6 µm, more preferably from 0.05 µm to 1 µm, and even more preferably from 0.05 µm to 0.5 µm has proven advantageous.

The particle size of a pigment can be reduced by any standard grinding techniques. Preferred grinding techniques include: high speed mixers, Kady Mills, colloid mills, homogenizers, microfluidizers, sonalators, ultrasonic mills, roll mills, ball mills, roller mills, vibrating ball mills, attritors, sand mills, varikinetic dispensers, three-roll mills, Banbury mixers, or other techniques known to those skilled in the art (see Ross S and Morrison ID, Colloidal Systems and Interfaces. New York: John Wiley & Sons, 1988.)

The present invention provides a method of preparing preconditioned pigment particles. A preferred method of the invention comprises: (a) grinding a pigment in a solution of a polyionic material to a particle size of 1.5 micrometers or smaller to obtain a dispersion, wherein the concentration of the polyionic material is sufficient to coat pigment particles; (b) filtering the solution with pigment particles; (c) washing the filtered pigment particles; and (d) drying the filtered pigment particles coated with the one or more polyionic materials.

Any standard grinding techniques can be used in the present invention. Preferred grinding techniques include: high speed mixers, Kady Mills, colloid mills, homogenizers, microfluidizers, sonalators, ultrasonic mills, roll mills, ball mills, roller mills, vibrating ball mills, attritors, sand mills, varikinetic dispensers, three-roll mills, Banbury mixers, or other techniques known to those skilled in the art (see Ross S and Morrison ID, Colloidal Systems and Interfaces. New York: John Wiley & Sons, 1988.)

The previous disclosure will enable one having ordinary skill in the art to practice the invention. In order to better enable the reader to understand specific embodiments and the advantages thereof, reference to the following examples is suggested.

### Examples

### Example [1]

CuP pigment from SUN chemical is added into a 0.1 % polyallylamine (PAH) (polySciences, 75k MW) aqueous solution. For convenience the pH is adjusted to pH 5.0 with HCl. CuP particles are dispersed into the solution by stirring for about 10 minutes with a magneticly-coupled stirrer and bar magnet. It is believed that CuP particles are coated with PAH during dispersing (or washing) process. In a control experiment, the 0.1 % PAH is replaced by water. Even after stirring for over twelve hours, CuP particles are still not dispersed in water. The CuP particles dispersion in PAH solution is filtered to obtain PAH coated CuP particles which is then re-dispersed in a nefilcon formulation for making contact lens. It has been dispersed for over five months without any significant agglomeration.

### Example [2]

PAH coated CuP particles, obtained in Example 1 are decanted and allowed to dry in ambient conditions for a week. The dried coated CuP particles are then re-dispersed into water. The dried coated CuP particles can be dispersed in water within one minute.

## Claims

1. A method for preparing preconditioned pigment particles, wherein the preconditioning comprises:
(a) applying a coating of one or more polyionic materials onto the surfaces of pigments particles by contacting the pigment particles with a solution of the one or more polyionic materials, wherein said method step comprises grinding a pigment in a solution of a polyionic material to a particle size of 1.5 micrometers or smaller to obtain a dispersion, wherein the concentration of the polyionic material is sufficient to coat pigment particles; and
(b) separating the pigment particles from the solution, wherein said method step comprises filtering the solution with pigment particles; washing the filtered pigment particles; and drying the filtered pigment particles coated with the one or more polyionic materials;
wherein the polyionic material is selected from the group consisting of a polycationic material, or a mixture of a polycationic material and a polyanionic material, wherein the polycationic material is seleced from the group consisting of poly(allylamine hydrochloride), poly(ethyleneimine), poly(vinylbenzyltriamethylamine), polyaniline, sulphonated polyaniline, polypyrrole, poly(pyridinium acetylene), and mixtures thereof.

2. The method of claim 1, wherein the polyanionic material is selected from the group consisting of polymethacrylic acid, polyacrylic acid, poly(thiophene-3-acetic acid), poly(4-styrenesulfonic acid), sodium poly(styrene sulfonate), poly(sodium styrene sulfonate), and mixtures thereof.

3. The method of claim 1, wherein the particle size is smaller than 1 micrometer.

4. The method of claim 1, wherein the grinding step is carried out by using one or more grinding techniques selected from group consisting of high speed mixers, Kady Mills, colloid mills, homogenizers, microfluidizers, sonalators, ultrasonic mills, roll mills, ball mills, roller mills, vibrating ball mills, attritors, sand mills, varikinetic dispensers, three-roll mills, and Banbury mixers.

## Patentansprüche

1. Verfahren zur Herstellung von vorbehandelten Pigmentpartikeln, wobei die Vorbehandlung umfasst:
(a) Aufbringen einer Beschichtung aus einem oder mehreren polyionischen Materialien auf die Oberfläche der Pigmentpartikel durch Kontaktieren der Pigmentpartikel mit einer Lösung aus dem einen oder mehreren polyionischen Materialien; worin dieser Verfahrensschritt umfasst ein Pigment zu zerkleinern in einer Lösung eines polyionischen Materials zu einer Partikelgrösse von 1.5 Mikrometer oder kleiner, um eine Dispersion zu erhalten, worin die Konzentration des polyionischen Materials ausreichend ist, um die Pigmentpartikel zu beschichten; und
(b) Trennen der Pigmentpartikel von der Lösung, worin dieser Verfahrensschritt umfasst Filtrieren der Lösung mit Pigmentpartikeln, Waschen der filrierten Pigmentpartikel, und Trocknen der filtrierten Pigmentpartikel, die mit einem oder mehreren polyionischen Material beschichtet sind;
(c) worin das polyionische Material ausgewählt ist aus der Gruppe bestehend aus einem polykationischen Material, oder einer Mischung eines polykationischen Materials und eines polyanionischen Materials, worin das polykationische Material ausgewählt ist aus der Gruppe bestehend aus Poly(allylaminhydrochlorid), Poly(ethylenimin), Poly(vinylbenzyltriamethylamin), Polyanilin, sulfoniertes Polyanilin, Polypyrrol, Poly(pyridiniumacetylen), und Gemischen davon.

2. Verfahren nach Anspruch 1, wobei das polyanionische Material ausgewählt ist aus der Gruppe bestehend aus Polymethacrylsäure, Polyacrylsäure, Poly(thiophen-3-essigsäure), Poly(4-styrolsulfonsäure), Natrium-poly(styrolsulfonat), Poly(natrium-styrol-sulfonat), und Gemischen davon.

3. Verfahren nach Anspruch 1, wobei die Partikelgrösse kleine als 1 Mikrometer ist.

4. Verfahren nach Anspruch 1, wobei der Schritt des Zerkleinerns ausgeführt wird unter Verwendung von einer oder mehrerer Zerkleinerungstechniken ausgewählt aus der Gruppe bestehend aus Hochgeschwindigkeitsmixer, Kady Mühlen, Kolloidmühlen, Homogenisatoren, Mikrofluidisierern, Sonalatoren, Ultraschallmühlen, Walzmühlen, Kugelmühlen, Kegelmühlen, Kugelschwingmühlen, Reibungsmühlen, Sandmühlen, varikinetischen Dispensoren, Dreifachwalzwerken und Banbury Mixern.

## Revendications

1. Procédé de préparation de particules pigmentaires préconditionnées, dans lequel le préconditionnement comprend :
(a) l'application d'un revêtement, constitué d'un ou de plusieurs matériaux polyioniques, sur les surfaces des particules pigmentaires, par mise en contact des particules pigmentaires avec une solution du ou des matériaux polyioniques, ladite étape du procédé comprenant le broyage d'un pigment dans une solution d'un matériau polyionique jusqu'à une granulométrie de 1,5 micromètre ou moins pour obtenir une dispersion, la concentration du matériau polyionique étant suffisante pour revêtir les particules pigmentaires ; et
(b) la séparation des particules pigmentaires de la solution, ladite étape du procédé comprenant la filtration de la solution contenant les particules pigmentaires ; le lavage des particules pigmentaires filtrées ; et le séchage des particules pigmentaires filtrées revêtues du ou des matériaux polyioniques ;
dans lequel le matériau polyionique est choisi dans le groupe composé d'un matériau polycationique, ou d'un mélange d'un matériau polycationique et d'un matériau polyanionique, le matériau polycationique étant choisi dans le groupe composé du poly(chlorhydrate d'allylamine), du poly(éthylène-imine), de la poly(vinylbenzyltriméthylamine), de la polyaniline, de la polyaniline sulfonée, du polypyrrole, du poly(pyridinium acétylène), et de mélanges de ceux-ci.

2. Procédé selon la revendication 1, dans lequel le matériau polyanionique est choisi dans le groupe composé de l'acide polyméthacrylique, de l'acide polyacrylique, du poly(acide thiophène-3-acétique), du poly(acide 4-styrènesulfonique), du poly(styrènesulfonate) de sodium, du poly(styrènesulfonate de sodium) et de mélanges de ceux-ci.

3. Procédé selon la revendication 1, dans lequel la granulométrie est inférieure à 1 micromètre.

4. Procédé selon la revendication 1, dans lequel l'étape de broyage est mise en oeuvre par utilisation d'une ou de plusieurs techniques de broyage choisies dans le groupe composé des mélangeurs à grande vitesse, des broyeurs à meules, des broyeuses colloïdales, des homogénéisateurs, des microfluidiseurs, des équipements Sonolator, des broyeurs à ultrasons, des broyeurs à cylindres, des broyeurs à billes, des broyeurs à rouleaux, des broyeurs à billes vibrantes, des broyeurs à micro-éléments, des broyeurs à sable, des distributeurs Varicinetic, des broyeuses tricylindres et des mélangeurs Banbury.
